# EUROPÄISCHE PATENTSCHRIFT

(11) **EP 1 201 350 B1**
(45) Veröffentlichungstag und Bekanntmachung des Hinweises auf die Patenterteilung: **26.01.2005**
(21) Anmeldenummer: 01124938.0
(22) Anmeldetag: 19.10.2001
(51) Int. Cl.: B23P 19/02

(54) **Radsatzpresse zum Auf- und Abpressen von Rädern, Bremsscheiben oder dergleichen auf Achsen von Schienenfahrzeugen**
Wheel set press for pressing wheels, brake discs or the same onto and off of axles of railway vehicles
Presse pour jeu de roues pour monter ou démonter par pressage de roues, disques de frein ou similaires sur des essieux de véhicules ferroviaires

(30) Priorität: 24.10.2000 DE 20018215 U
(43) Veröffentlichungstag der Anmeldung: 02.05.2002
(73) Patentinhaber: MAE MASCHINEN- U. APPARATEBAU GÖTZEN Gmbh & CO. KG, D-40699 Erkrath (DE)
(72) Erfinder: Mitze, Manfred, 58300 Wetter (DE)
(74) Vertreter: GROSSE BOCKHORNI SCHUMACHER

(56) Entgegenhaltungen:
- US-A- 2 934 819
- US-A- 3 050 837
- US-A- 3 189 985
- US-A- 3 995 361
- US-A- 4 214 363
- PATENT ABSTRACTS OF JAPAN vol. 1997, no. 10, 31. Oktober 1997 (1997-10-31) -& JP 09 156302 A (KOJIMA TEKKOSHO:KK), 17. Juni 1997 (1997-06-17)

## Beschreibung

Die Erfindung bezieht sich auf eine Radsatzpresse zum Auf- oder Abpressen von Rädern, Bremsscheiben oder dergleichen auf Achsen von Schienenfahrzeugen der dem Oberbegriff des Anspruchs 1 entsprechenden Art.

Das sichere Fügen von Radscheiben, Bremsscheiben oder dergleichen einerseits und einer Achse andererseits, die im montierten Zustand drehbar an einem Schienenfahrzeug gelagert ist, ist für den zuverlässigen Betrieb letzteres von herausragender Bedeutung. Weil die Räder in den meisten Fällen ausschließlich durch Reibschluß auf der Achse fixiert werden, muß zwischen Radbohrung und Achs-Außendurchmesser eine Preßpassung vorhanden sein. Der Montagevorgang neuer oder überarbeiteter Radscheiben, Bremsscheiben oder dergleichen auf der Achse sowie der Demontagevorgang derselben nach Erreichen der Verschleißgrenze von der Achse erfordert daher hohe Kräfte im Bereich von 800 bis 2500 kN.

Wenn im folgenden von "Radsatz" die Rede ist, so ist hiermit die Achse mit sämtlichen aufzupressenden Bauteilen, wie Radscheiben, Bremsscheiben oder dergleichen, gemeint. Unter "Fügen" sei sowohl das Zusammenfügen der Bauteile, mit anderen Worten: Das Aufpressen der Radscheiben, Bremsscheiben oder dergleichen auf die Achse, als auch das Abpressen dieser Bauteile von der Achse gemeint.

Hydraulische Pressen haben die Fähigkeit, große Kräfte über lange Hübe hinweg aufbringen zu können; sie sind daher für das Fügen von Radsätzen optimal geeignet. Schon gegen Ende des Neunzehnten Jahrhunderts wurden hydraulisch betriebene Radsatzpressen mit Erfolg eingesetzt. Die bislang bekannt gewordenen Radsatzpressen stimmen in ihrem prinzipiellen Aufbau und in ihrer Wirkungsweise untereinander und mit denjenigen, die gegen Ende des Neunzehnten Jahrhunderts eingesetzt wurden, im wesentlichen überein. Beispielhaft sei auf eine Radsatzpresse der Firma Hoesch Maschinenfabrik Deutschland AG der Serie PR verwiesen. Sie ist als horizontal angeordnete, mit einem ölhydraulisch angetriebenen Hochdruckzylinder ausgestattete Zweisäulenpresse ausgeführt. Der Hochdruckzylinder ist in einem seitlichen Zylinderholm installiert, in dem des weiteren die beiden Säulen an einem Ende fixiert sind. Der Lagerung der anderen Enden der Säulen dient eine Endtraverse, die - wie auch der Zylinderholm - mit einem Flansch zur Befestigung der Radsatzpresse am Boden ausgestattet ist. Mit ihren oberen Enden tragen der Zylinderholm und die Endtraverse oftmals eine sich im wesentlichen parallel zu den Säulen erstreckende Brückenkrananordnung.

Beide Säulen, die in dem Zylinderholm und in der Endtraverse drehbar gelagert sind, weisen über ihre freie Länge zwischen dem Zylinderholm und der Endtraverse jeweils ein Spindelgewinde auf. Dieses dient der Verlagerung eines als Widerlager dienenden, C-förmigen Laufholms, welche dreibare Muttern mit Innengewinde aufweist, die sich mit den Spindelgewinden der Säulen im Eingriff befinden. Der Laufholm verfügt über Nuten, in die die eigentlichen, nach vorn offenen Fügewerkzeuge eingeschoben werden können.

Zum Fügen eines Radsatzes werden bei dieser Radsatzpresse zunächst die Achse und das zu fügende Bauteil mit Hilfe des Brückenkrans in die Vormontageposition gebracht. In dieser ist das zu fügende Bauteil auf die Achse aufgeschoben und befindet sich in einer Position, von der aus es auf einen den Preßsitz bildenden Umfangsbund aufgepreßt werden kann. Die Achse wird dann - an dem Brükkenkran hängend - manuell derart ausgerichtet, daß ihre Längsmittelachse und die Längsmittelachse des Preßzylinders zusammenfallen. Die Fixierung der Achse in dieser Position erfolgt einerseits mittels einer an der Stirnfläche des Druckstempels des Hochdruckzylinders vorgesehenen Zentrierspitze, die abgefedert ist und in eine Zentrierbohrung der Achse eingreift, andererseits mittels einer zweiten Zentrierspitze, die durch einen etwa an der Endtraverse befestigten Hydraulikzylinder bewegt werden kann. Vor dem Einspannen der Achse wird der Laufholm so verfahren, daß sich das darin eingeschobene Werkzeug in Preßrichtung gesehen hinter dem zu fügenden Bauteil befindet.

Der eigentliche Preßvorgang erfolgt dann, indem durch Betätigung des Hochdruckzylinders die Achse in Preßrichtung soweit verlagert wird, bis das sich an dem Werkzeug abstützende Bauteil auf der Achse in der gewünschten Position befindet.

Zum Fügen eines weiteren Bauteils wird dann mittels des Brückenkranes die Achse der Radpresse entnommen, im Falle des Aufpressens wird das nächste Bauteil in seine Vormontageposition gebracht, im Falle des Abpressens das gelockerte Bauteil entnommen. Anschließend wird das Werkzeug durch Rotation der mit Gewinde ausgestatteten Muttern in seine für den nächsten Preßvorgang erforderliche Position verlagert. Die Achse mit den Bauteilen wird dann - wiederum mit Hilfe des Brückenkranes - vom Bedienpersonal in die bereits oben beschriebene Preßposition gebracht und der Fügevorgang erneut durchgeführt.

Nachteilig ist bei den Vorrichtungen dieser Art, daß der Radsatz mehrfach mit Hilfe des Brückenkrans in die Radsatzpresse eingebracht und wieder entnommen werden muß, bis sämtliche Fügevorgänge abgeschlossen sind, da sich durch das hierzu benötigte Personal die Kosten für das Fügen von Radsätzen drastisch erhöhen. Darüber hinaus besteht für das Bedienpersonal aufgrund der manuellen Bestückung der Radsatzpresse mit teils tonnenschweren Bauteilen eine nicht zu unterschätzende Verletzungsgefahr.

Diese Nachteile sind bei der dem Oberbegriff des Anspruchs 1 zugrundeliegenden Radsatzpresse nach der US-A-4 214 363 nicht mehr gegeben. Diese Radsatzpresse umfasst zwei gleichachsige, einander entgegengerichtete, fest montierte und durch achsparallele Zuganker miteinander verbundene Kolbenzylindereinheiten, die die Radachse zwischen sich einspannen und unter Aufrechterhaltung der Spannung axial eine Strecke verlagern können. Zwischen den Kolbenzylindereinheiten ist im Preßwiderlager etwa in der Mitte feststehend angeordnet und an den Zugankern abgestützt. Das Preßwiderlager ist senkrecht zur Achse etwa C-förmig gestaltet, so dass die Radachse von der offenen Seite des "C" her eingebracht werden kann. Mit dem feststehenden Preßwiderlager wirken um achsparallele Achsen schwenkbare weitere C-förmige Preßwiderlager zusammen, die unmittelbar neben dem feststehenden Preßwiderlager angeordnet sind und aus einer Position außerhalb des Preßbereichs in eine Position innerhalb des Preßbereichs einschwenkbar sind. Die weiteren Preßwiderlager lassen zwar die Radachsen, nicht aber die Räder, Bremsscheiben oder dergleichen durch. Beim Presse kommen diese seitlich an dem jeweiligen schwenkbaren Preßwiderlager und dieses an dem feststehenden Preßwiderlager zur Anlage und gestalten das Hindurchpressen der Radachsen durch das jeweilige Rad, die jeweilige Bremsscheibe oder dgl.

Das Vorhandensein der verschiedenen Preßwiderlager in der Mitte stellt eine Einschränkung der räumlichen Gegebenheiten längs der Radachsen und außerdem einen erheblichen zusätzlichen baulichen Aufwand dar.

Der Erfindung liegt daher die Aufgabe zugrunde, eine Radsatzpresse zu schaffen, bei der die vorgenannten Nachteile verbessert sind.

Diese Aufgabe wird durch die in Anspruch 1 wiedergegebene Radsatzpresse gelöst.

Um das Fügen der verschiedenen, über die Länge der Achse verteilten Bauteile zu ermöglichen, ohne daß es hierzu einer Verlagerung der Achse mittels der Einrichtung zur Aufnahme derselben über größere Längen bedarf, ist das mindestens eine Preßwiderlager entlang der Achse in verschiedenen Positionen festlegbar, d. h. das Preßwiderlager kann an eine beliebige Stelle gebracht, wo es je nach Lage des zu fügenden Rades oder dergleichen benötigt wird, und dort gegen die Preßkraft verriegelt werden.

Dadurch, daß die Einrichtung zur Aufnahme der Achse und das mindestens eine Werkzeug quer zur Preßrichtung relativ zueinander verlagerbar sind, kann der zusammenzufügende Radsatz vollständig vormontiert werden, bevor er in die Einrichtung zur Aufnahme der Achse eingesetzt wird. Schrittweise kann nun das Preßwiderlager durch Verlagerung quer zur Preßrichtung und in Preßrichtung in diejenigen Positionen gebracht werden, die für den Preßvorgang des jeweiligen Bauteils erforderlich sind, ohne daß hierzu die Achse bzw. der Radsatz der Radsatzpresse zwischendurch entnommen werden muß. Durch die erfindungsgemäße Ausgestaltung der Radsatzpresse ist es somit erstmalig möglich, einen vollständigen Fügevorgang eines Radsatzes durchführen zu können, ohne daß es hierzu irgendwelcher Manipulationen durch das Bedienpersonal bedarf. Es versteht sich, daß die für den Fügevorgang erforderlichen Bewegungsabläufe in der Radsatzpresse - Verlagerung des Preßwiderlagers quer und in Preßrichtung, Ausfahren des Preßzylinders - durch elektronische Meß-, Regel- und Betätigungselemente vollständig automatisiert werden können.

Gemäß Anspruch 2 empfiehlt sich eine Ausgestaltung der Radsatzpresse, bei der die Zentrierspitzen unter Beibehaltung ihres Abstandes zueinander in Achsrichtung verlagerbar sind.

Es ist durch diese Ausgestaltung möglich, die Achse in Preßrichtung vor der Durchführung des eigentlichen Preßvorganges in eine Stellung zu bringen, die zum Aufpressen des jeweiligen Bauteils in seine exakte Endlage benötigt wird, ohne daß hierzu das Werkzeug in Preßrichtung feinfühlig verstellt werden muß.

Konstruktiv wird die Verlagerung des Preßwiderlagers entlang der Achse gemäß Anspruch 3 vorzugsweise dadurch bewerkstelligt, daß das Preßwiderlager an einem in Achsrichtung verlagerbaren, in verschiedenen Positionen festlegbaren Schlitten vorgesehen ist.

Der Schlitten ist gemäß Anspruch 4 vorzugsweise zwischen einer oberen und einer unteren Quertraverse angeordnet. Die Festlegung der Positionen erfolgt dann über Arretiermittel, die einen formschlüssigen Eingriff des Schlittens mit den Quertraversen erlauben.

Die Arretiermittel sind gemäß Anspruch 5 vorzugsweise als Verriegelungsglieder ausgestaltet, die wahlweise in entsprechende Ausnehmungen eingreifen. Die Betätigung der Verriegelungsglieder kann beispielsweise elektromagnetisch, hydraulisch oder pneumatisch erfolgen.

Der das Preßwiderlager tragende Schlitten wird vorzugsweise mittels eines Linearverstellers, beispielsweise eines Spindel- oder Zahnradantriebs in Achsrichtung verlagert (Anspruch 6).

Zur Erzielung der Querbewegung des mindestens einen Preßwiderlagers ist letzteres vorzugsweise auf dem Schlitten quer zur Achsrichtung verlagerbar angeordnet, was konstruktiv dadurch bewirkt werden kann, daß das Preßwiderlager in quer zur Preßrichtung verlaufenden Nut/Federführungen gleitgelagert ist (Anspruch 7).

Der Verlagerung des Preßwiderlagers quer zur Achsrichtung dient dann gemäß Anspruch 8 vorzugsweise eine hydraulisch betätigbare Kolben/Zylindereinheit.

Weist zumindest die untere Quertraverse eine etwa ebene Oberfläche auf und ist diese zudem zum versenkten Einbau in den Boden geeignet ausgestaltet (Anspruch 9), so ist eine entsprechend aufgestellte und montierbare Radsatzpresse besonders gut zugänglich.

Es kann dann eine Schienenanordnung für ein Flurförderzeug zum An- und/oder Abtransport zu fügender Radsätze vorgesehen sein, die durch die Radsatzpresse hindurchführt (Anspruch 10). Durch diese besonders bevorzugte Ausgestaltung kann mit Hilfe eines geeigneten Flurförderzeugs, welches für sich genommen Gegenstand einer weiteren Schutzrechtsanmeldung vom selben Tage ist, ein nahezu vollständig automatisiertes Fügen erfolgen, da durch die Möglichkeit des "Durchfahrens" der Radsatzpresse zu fügende Radsätze der Radsatzpresse von der einen Seite zugeführt, in dieser gefügt, und anschließend zur anderen Seite hin der Weiterbearbeitung bzw. dem Transport übergeben werden können.

In der Zeichnung ist ein Ausführungsbeispiel einer erfindungsgemäßen Radsatzpresse dargestellt. Es zeigen:
- Fig. 1: eine erfindungsgemäße Radsatzpresse in einer Ansicht von vorn (Ansicht A in Fig. 2 und 3);
- Fig. 2: dieselbe Radsatzpresse in einer Seitenansicht (Ansicht B in Fig. 1) im Zustand zwischen zwei Preßvorgängen;
- Fig. 3: dieselbe Radsatzpresse in einer Fig. 2 entsprechenden Ansicht während eines Preßvorganges;
- Fig. 4a) bis e): - schematisch - den Ablauf zweier mit der erfindungsgemäßen Radsatzpresse durchgeführter Preßvorgänge sowie
- Fig. 5: ein Ausführungsbeispiel einer Anlage zum automatischen Fügen von Radsätzen unter Verwendung der erfindungsgemäßen Radsatzpresse.

Die in der Zeichnung als Ganzes mit 100 bezeichnete Radsatzpresse umfaßt zwei Zylinderholme 1, 2, in denen jeweils eine hydraulisch betätigte Kolben/Zylindereinheit 3, 4 derart installiert ist, daß die Mittellängsachsen der jeweiligen Kolben auf einer gemeinsamen Geraden S liegen. Die Kolben/Zylindereinheiten 3, 4 sind derart angeordnet, daß deren Kolben 5, 6 einander zugewandt sind.

Beide Kolben tragen Druckstempel 7, 8, deren zugewandten Stirnseiten 9, 10 zur Ausübung des zum Fügen des Radsatzes notwendigen Preßdrucks geeignet sind. An den Stirnseiten ist jeweils eine abgefederte Zentrierspitze 11, 12 vorgesehen.

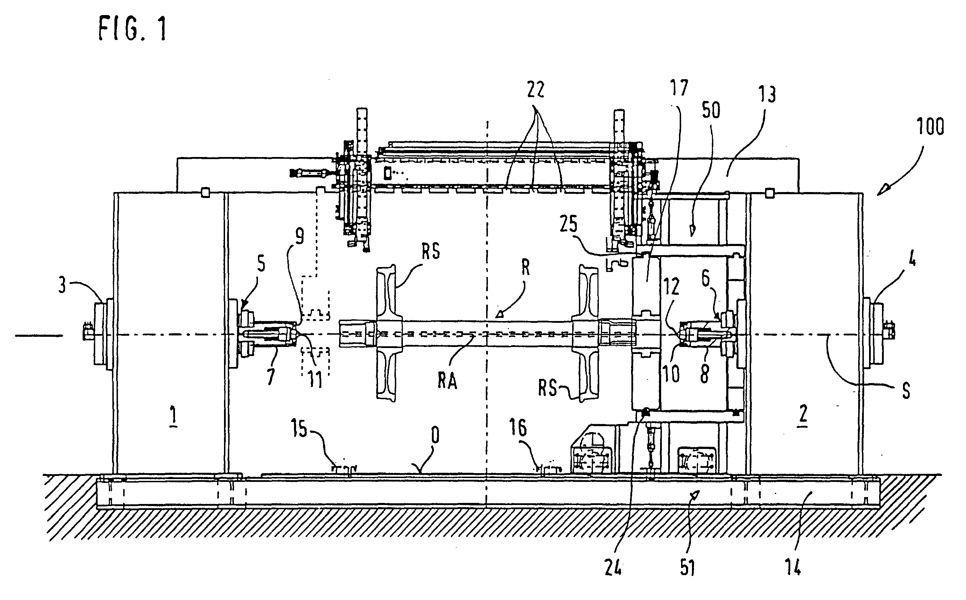

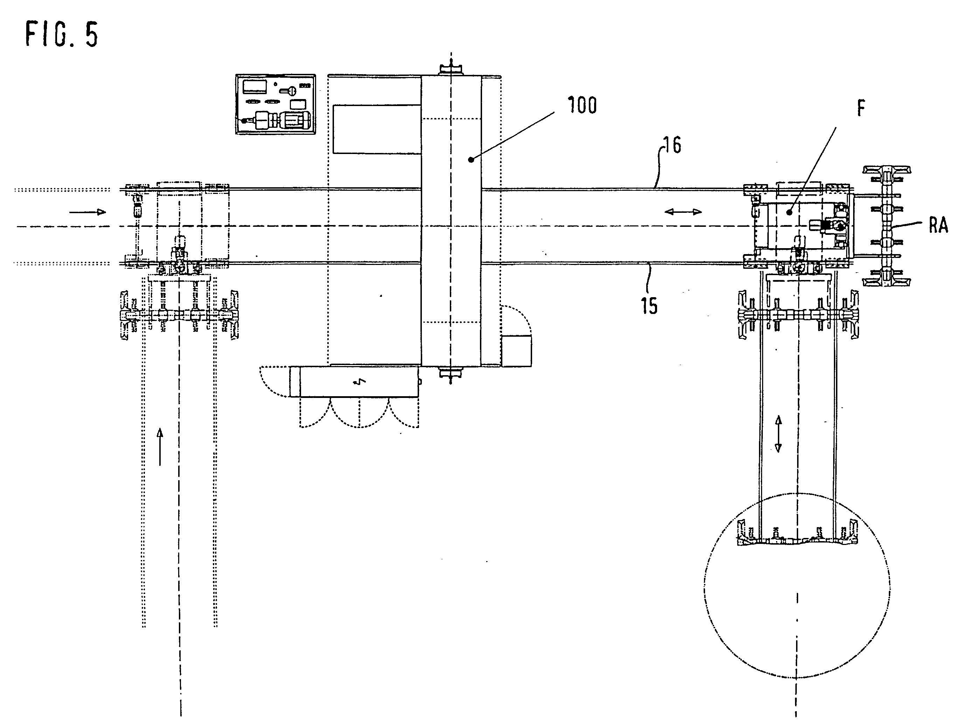

In Fig. 1 befinden sich die beiden Kolben 5, 6 der Kolben/Zylindereinheiten 3, 4 in ihren zurückgezogenen Zuständen. Zur Aufnahme des als Ganzes mit R bezeichneten Radsatzes in der Radsatzpresse werden die beiden Kolben soweit ausgefahren, daß die Zentrierspitzen 10, 11 in entsprechende, an der Achse RA des Radsatzes zentrisch vorgesehene, in der Zeichnung nicht dargestellte Zentrierbohrungen eingreifen und die beiden Stirnseiten 9, 10 die Enden der Radsatzachse RA zwischen sich einklemmen. Die beiden Zylinderholme 1, 2 der Radsatzpresse 100 sind über eine obere und eine untere Quertraverse 13, 14 miteinander verbunden. Die untere Quertraverse 14 ist bei dem in der Zeichnung dargestellten Ausführungsbeispiel zum Einlassen in den Untergrund geeignet ausgebildet und weist eine im wesentlichen ebene Oberfläche O auf, so daß ein in Fig. 1 lediglich angedeutetes Paar von Schienen 15, 16 quer zur Achse S durch die Radsatzpresse 100 hindurch verlegt werden kann. Dieses Schienenpaar kann beispielsweise der Führung eines Flurförderzeugs F (s. Fig. 5) zur Bereitstellung bzw. zum Abtransport zu fügender bzw. bereits gefügter Radsätze R dienen, welches Gegenstand einer weiteren, zeitgleich hinterlegten Schutzrechtsanmeldung ist und daher an dieser Stelle nicht im einzelnen beschrieben werden soll.

In Richtung der Achse S zwischen den Zylinderholmen 1, 2 verlagerbar ist eine als Ganzes mit 50 bezeichnete Schlittenanordnung vorgesehen, die der Aufnahme eines Preßwiderlagers 17 dient, welches das Preßwerkzeug für zu fügende Bauteile, die in Fig. 1 am Beispiel von Radscheiben RS dargestellt sind, bildet.

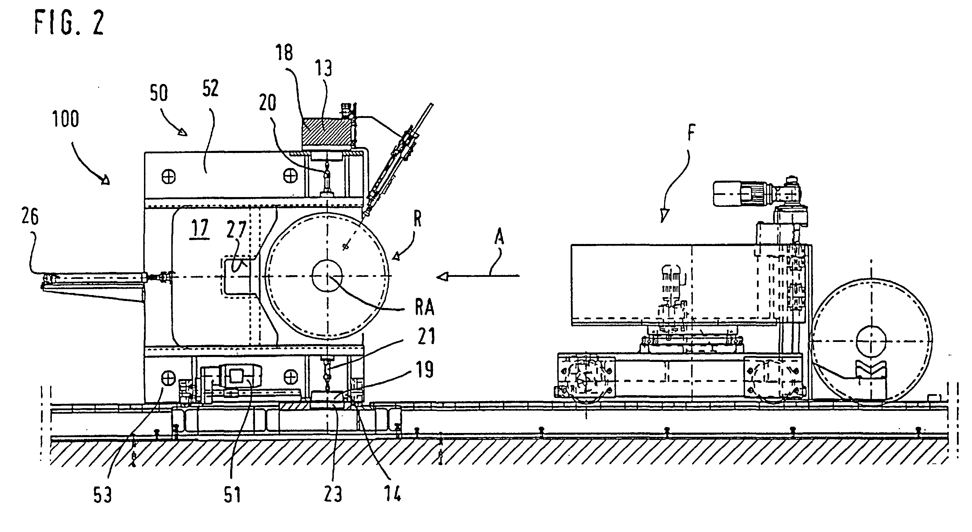

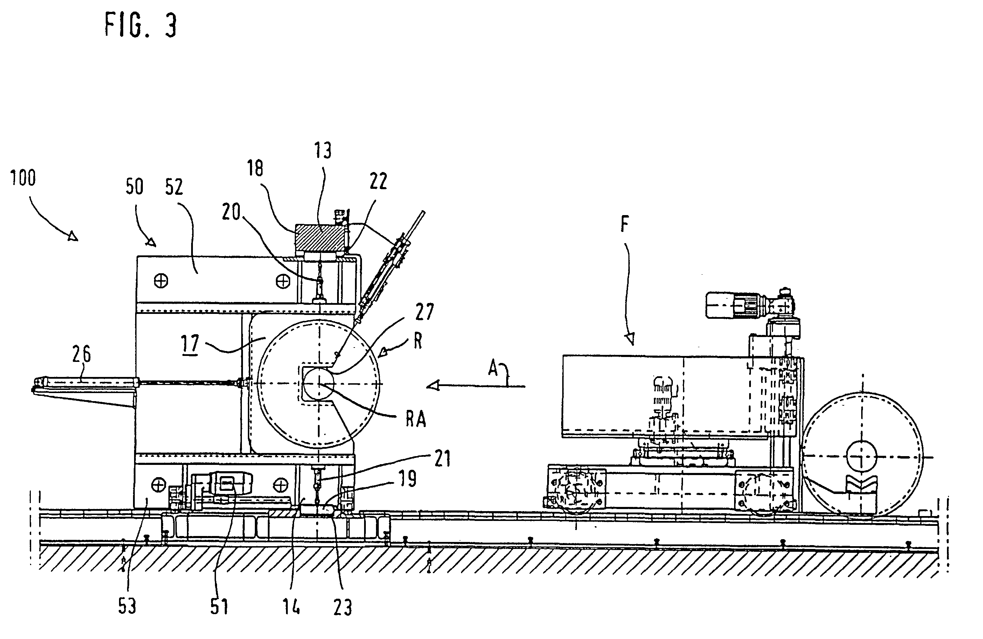

Die Schlittenanordnung 50 kann in verschiedenen Positionen zwischen den beiden Zylinderholmen 1, 2 arretiert werden. Hierzu dienen, wie insbesondere in Fig. 2 und 3 erkennbar, an der Schlittenanordnung vorgesehene Verriegelungsglieder 18, 19, die mittels hydraulisch betätigter Kolben/Zylindereinheiten 20, 21 zwischen einer zurückgezogenen Position (Fig. 2), in der sie im Außenumfang der Schlittenanordnung 50 verbleiben, und einer ausgefahrenen Position, in welcher sie den Außenumfang der Schlittenanordnung überragen (Fig. 3), verlagerbar sind.

Die Verriegelungsglieder greifen im ausgefahrenen Zustand in hinsichtlich ihrer Dimensionen angepaßte Ausnehmungen 22, 23 in den Quertraversen 13, 14 ein. Die Verriegelungsglieder 18, 19 und die Ausnehmungen 22, 23 sind derart konzipiert, daß die Verriegelung geeignet ist, die mit der Radsatzpresse 100 erzielbaren Preßkräfte aufzunehmen.

Zur Verlagerung der Schlittenanordnung 50 in Richtung der Achse S ist ein in der Zeichnung nicht näher dargestellter Antrieb 51 vorgesehen, der in beliebiger Weise ausgestaltet sein kann. In Betracht kommen beispielsweise Spindel, Zahnrad, Ketten oder Riemenantriebe, die mittels von Elektro-, Hydraulik- oder Pneumatikmotoren betrieben werden können.

Die Schlittenanordnung 50 ist im Querschnitt C-förmig ausgebildet und derart angeordnet, daß die offene Seite der Bedienerseite zugewandt ist. Die einander zugewandten Seiten des oberen und des unteren Schenkels 52, 53 verlaufen einander parallel und weisen jeweils eine Längsnut auf, in der das Preßwiderlager 17 mit einem entsprechenden Führungsvorsprung 24, 25 gleitgelagert ist. Mittels einer hydraulisch betätigbaren Kolben/Zylindereinheit 26, die einerseits mit der Schlittenanordnung 50, andererseits mit dem Preßwiderlager 17 verbunden ist, zwischen der in Fig. 2 dargestellten, zurückgezogenen Position, in der das Preßwiderlager 17 die Achse des Radsatzes RA, sowie die Radscheiben RS freigibt, und der in Fig. 3 dargestellten vorgeschobenen Position, in welcher das Preßwiderlager 17 mit einer zum Bediener hin offenen Ausnehmung 27 die Radsatzachse RA umgreift und die zu verpressende Radscheibe RS in Preßrichtung gesehen hintergreift, verlagert werden.

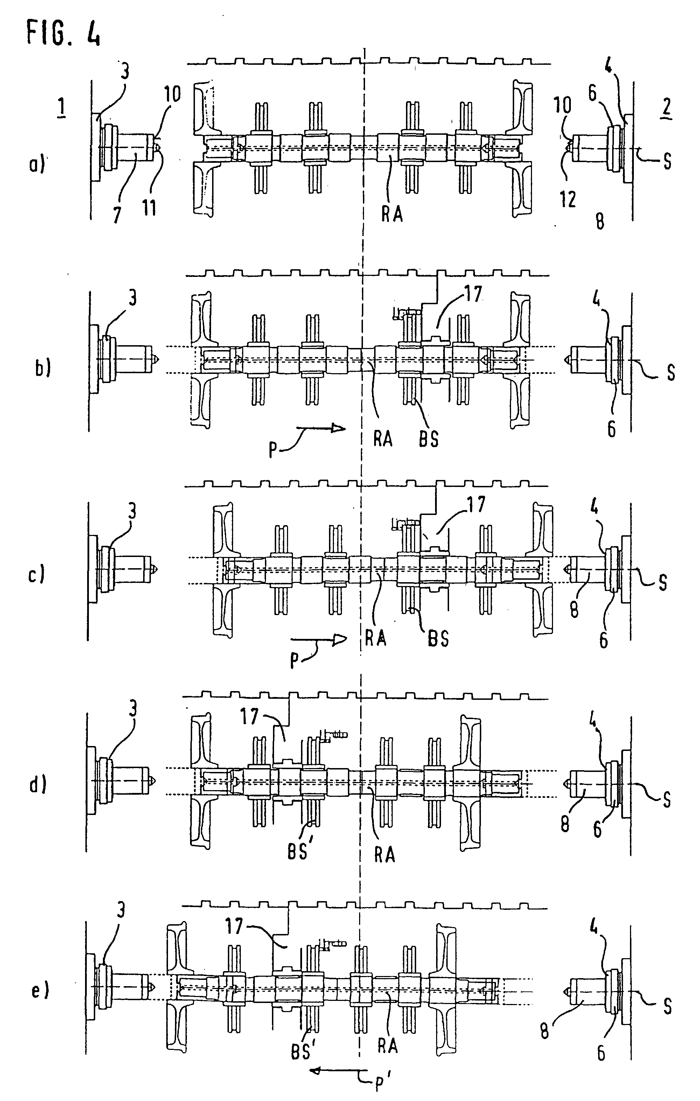

Anhand von Fig. 4 soll nun die Wirkungsweise der erfindungsgemäßen Radsatzpresse 100 am Beispiel des Aufpressens zweier Bauteile, hier Bremsscheiben, erläutert werden. Zunächst wird - wie in Fig. 4a) dargestellt - der vormontierte Radsatz mit einem hier nicht erkennbaren, geeigneten Flurförderzeug oder auch einem Kran in Preßhöhe der Radsatzpresse 100 zugeführt, so daß durch Ausfahren der beiden Kolben/Zylindereinheiten 3, 4 die Achse RA von den Zentrierspitzen 11, 12 zentriert zwischen den Stirnseiten 9, 10 der Druckstempel 7, 8 eingespannt wird. Das Preßwiderlager 17 befindet sich während dieses ersten Verfahrensschrittes in seiner zurückgezogenen Position, der Schlitten 50 vorzugsweise benachbart zu einem der beiden Zylinderholme 1, 2.

Wie in Fig. 4b) dargestellt, wird anschließend der Schlitten 50 entlang der Achse S in eine Position verlagert, in der das Preßwiderlager 17 durch Ausfahren der Zylinder/Kolbeneinheit 26 in eine Position verlagert werden kann, in der es das zu verpressende Bauteil, hier eine Bremsscheibe BS in Preßrichtung P gesehen, hintergreift.

Nach einer gegebenenfalls erforderlichen gleichsinnigen Betätigung der Kolben/Zylindereinheiten 3, 4, um die Bremsscheibe BS in Anlage mit dem Preßwiderlager 17 zu bringen, erfolgt der eigentliche Preßvorgang, in dem bei dem in Fig. 4 dargestellten Beispiel die Kolben/Zylindereinheit 3 mit Preßdruck beaufschlagt wird und so die Achse RA unter Rückzug des Kolbens 6 der Kolben/Zylindereinheit 4 soweit verlagert wird, bis die Bremsscheibe sich vollständig auf dem auf der Achse vorgesehenen Sitz befindet.

Um nun ein weiteres Bauteil des vormontierten Radsatzes aufpressen zu können, wird zunächst das Preßwiderlager 17 mittels der Kolben/Zylindereinheit 26 zurückgezogen, der Schlitten 50 entriegelt, mit der Antriebseinheit 51 in Richtung der Achse S verlagert und in einer neuen Position verriegelt, in welcher das Preßwiderlager 17 das nun zu fügende Bauteil, hier die Bremsscheibe BS', hintergreift. Bei dem in Fig. 4d) und e) dargestellten Vorgang erfolgt nun eine Verlagerung der Achse RA in Richtung P', in dem die Kolben/Zylindereinheit 4 mit Preßdruck beaufschlagt wird.

Anhand der vorstehenden, beispielhaften Beschreibung der Wirkungsweise der erfindungsgemäßen Radsatzpresse wird ersichtlich, daß mit dieser ein vollständig vormontierter (im Falle des Aufpressens) bzw. ein vollständig verpreßter (im Falle des Abpressens) vollständig zusammengefügt bzw. getrennt werden kann, ohne daß es nach dem Einsatz des Radsatzes in die Presse irgendwelcher Manipulationen oder gar einer Entnahme des Radsatzes oder von Bauteilen desselben durch das Bedienpersonal bedarf.

## Patentansprüche

1. Radsatzpresse (100) zum Auf- oder Abpressen von Rädern, Bremsscheiben oder dergleichen auf Achsen (RA) von Schienenfahrzeugen,
mit zwei auf einer gemeinsamen Geraden (S) feststehend angeordneten, gegeneinander gerichteten Kolbenzylindereinheiten (3, 4) zur Ausübung des notwendigen Preßdrucks und zur Verlagerung der Achse und des mindestens einen Preßwiderlagers (17) in Längsrichtung der Achse relativ zueinander zur Bewirkung des Auf- oder Abpreßvorgangs,
mit einer Einrichtung zur Aufnahme einer Achse in der Radsatzpresse während des Preßvorganges mit zwei einander gegenüberliegenden Zentrierspitzen (11, 12), wobei jede Zentrierspitze in eine am jeweils zugewandten Achsende vorgesehene Zentrierbohrung einführbar ist und Mittel vorgesehen sind, mittels derer der Abstand der Zentrierspitzen zueinander veränderbar ist und wobei die Zentrierspitzen (11, 12) and der zur Übertragung der Preßkraft auf das zugewandte Ende der Achse geeigneten Stirnseite (9,10) von Druckstempeln (7, 8) an den Kolbenzylindereinheiten (3, 4) vorgesehen sind,
mit mindestens einem Preßwiderlager (17) zum Abstützen eines Rades, einer Bremsscheibe oder dergleichen während des Preßvorganges, das derart ausgestaltet ist, daß es durch eine Relativbewegung zur Achse quer zu deren Längsrichtung in seine Abstützstellung bringbar und ansonsten sich außerhalb des Preßbereiches befindet,
**dadurch gekennzeichnet,**
**daß** das mindestens eine Preßwiderlager (17) entlang der Achse in verschiedenen Positionen festlegbar ist.

2. Radsatzpresse nach Anspruch 1, **dadurch gekennzeichnet, daß** die Zentrierspitzen (11,12) unter Beibehaltung Ihres Abstandes zueinander in Achsrichtung verlagerbar sind.

3. Radsatzpresse nach Anspruch 1 oder 2, **dadurch gekennzeichnet, daß** das Preßwiderlager (17) an einer in Achsrichtung verlagerbaren, in verschiedenen Positionen festlegbaren Schlittenanordnung (50) vorgesehen ist.

4. Radsatzpresse nach Anspruch 3, **dadurch gekennzeichnet, daß** die Schlittenanordnung (50) zwischen einer oberen und einer unteren Quertraverse (13,14) angeordnet ist und daß die Schlittenanordnung (50) und die Quertraversen (13,14) Arretiermittel aufweisen, die einen formschlüssigen Eingriff der Schlittenanordnung (50) mit den Quertraversen (13,14) in den verschiedenen Positionen erlauben.

5. Radsatzpresse nach Anspruch 4, **dadurch gekennzeichnet, daß** die Arretiermittel in den Quertraversen (13,14) vorgesehene, in Achsrichtung beabstandete Ausnehmungen (22,23) und an den beiden Seiten der Schlittenanordnung (50), die jeweils einer der Quertraversen zugewandt sind, wahlweise jeweils ein in zumindest einer der Ausnehmungen einführbares Verriegelungsglied (18,19) umfassen.

6. Radsatzpresse nach einem der Ansprüche 3 bis 5, **dadurch gekennzeichnet, daß** die Schlittenanordnung (50) mittels eines Linearverstellers, beispielsweise eines Spindel- oder Zahnradantriebs in Achsrichtung verlagerbar ist.

7. Radsatzpresse nach einem der Ansprüche 3 bis 6, **dadurch gekennzeichnet, daß** das Werkzeug (17) auf der Schlittenanordnung (50) quer zur Achsrichtung verlagerbar angeordnet ist.

8. Radsatzpresse nach Anspruch 7, **dadurch gekennzeichnet, daß** der Verlagerung des Werkzeuges (17) quer zur Achsrichtung eine hydraulisch betätigbare Kolben/Zylindereinheit (26) dient.

9. Radsatzpresse nach einem der Ansprüche 4 bis 8, **dadurch gekennzeichnet, daß** zumindest die untere Quertraverse (14) eine etwa ebene Oberfläche aufweist und zum versenkten Einbau in den Boden geeignet ausgestaltet ist.

10. Radsatzpresse nach einem der Ansprüche 1 bis 9, **dadurch gekennzeichnet, daß** eine über die untere Quertraverse (14) führende, die Radsatzpresse durchsetzende Schienenanordnung (15,16) für mindestens ein Flurförderzeug (F) zum An- und/oder Abtransport auf- oder abzupressender Radsätze (R) vorgesehen ist.

## Revendications

1. Presse (100) pour jeu de roues servant au montage ou au démontage de roues, de disques de frein ou similaires sur des essieux (RA) de véhicules ferroviaires, comportant :
- deux vérins (3, 4) montés fixes en opposition sur une droite commune (S), pour exercer la force de pressage nécessaire et pour déplacer l'essieu ainsi qu'au moins un contrepalier de pressage (17) l'un par rapport à l'autre, selon la direction longitudinale de l'essieu, de manière à réaliser l'opération de montage ou de démontage par pressage,
- une installation de réception un essieu dans la presse pendant l'opération de pressage et comportant deux pointes de centrage (11, 12) se faisant face et pouvant être engagées chacune dans un alésage de centrage prévu dans l'extrémité correspondante de l'essieu,
- des moyens par lesquels peut varier la distance entre les pointes de centrage (11, 12) qui, pour transmettre la force de pressage, sont prévues sur les faces frontales (9, 10) en regard des extrémités de l'essieu, de blocs de pression (7, 8) montés sur les vérins (3, 4),
- au moins un contrepalier de pressage (17) pour servir d'appui à une roue, un disque de frein ou similaire, pendant l'opération de pressage et qui est configuré pour pouvoir amener ce contrepalier dans sa position d'appui par un déplacement transversal par rapport à l'essieu, alors qu'autrement il se trouve en dehors de la zone de pressage,
**caractérisée en ce que**
le contrepalier de pressage (17) au nombre d'un au moins, peut être fixé dans diverses positions le long de l'essieu.

2. Presse selon la revendication 1,
**caractérisée en ce que**
les pointes de centrage (11, 12) peuvent être déplacées selon la direction de l'essieu, tout en conservant leur espacement.

3. Presse selon la revendication 1 ou 2,
**caractérisée en ce que**
le contrepalier de pressage (17) est prévu sur un système à traîneau (50) qui peut se déplacer selon la direction axiale et être fixé en diverses positions.

4. Presse selon la revendication 3,
**caractérisée en ce que**
le système à traîneau (50) est monté entre deux traverses transversales, une supérieure (13) et une inférieure (14), qui portent ainsi que le système à traîneau, des moyens d'arrêt permettant de verrouiller par combinaison de formes le système (50) sur les traverses (13, 14), dans diverses positions.

5. Presse selon la revendication 4,
**caractérisée en ce que**
les moyens d'arrêt prévus sur les traverses (13, 14), des évidements (22, 23) espacés selon la direction axiale sur les deux côtés du système à traîneau (50) qui sont en face chacun d'une des traverses transversales, présentent chacun facultativement un organe de verrouillage (18, 19) qui peut être introduit au moins dans un des évidements.

6. Presse selon une des revendications 3 à 5,
**caractérisée en ce que**
le système à traîneau (50) peut être déplacé en direction axiale par un organe de déplacement linéaire, par exemple un entraîneur à vis ou à pignons.

7. Presse selon une des revendications 3 à 6,
**caractérisées en ce que**
l'outil (17) peut se déplacer sur le système à traîneau (50) perpendiculairement à la direction de l'essieu.

8. Presse selon la revendication 7,
**caractérisée en ce qu'**
un vérin hydraulique (26) sert à déplacer l'outil (17) perpendiculairement à la direction de l'essieu.

9. Presse selon une des revendications 4 à 8,
**caractérisée en ce qu'**
au moins la traverse inférieure (14) présente une face supérieure à peu près plane, et elle est conçue pour être montée noyée dans le sol.

10. Presse selon une des revendications 1 à 9,
**caractérisée en ce qu'**
il est prévu un système de rails (15, 16) passant sur la traverse inférieure (14) et à travers la presse, pour guider au moins un convoyeur au sol (F) servant à amener et/ou à retirer les jeux de roues qu'il s'agit de monter ou de démonter par pressage.

## Claims

1. Wheelset press (100) for pressing or removing wheels, brake discs or similar onto or from axles (RA) of rail vehicles,
with two piston cylinder units (3, 4) firmly arranged on a common straight line (S) and directed opposite each other to exert the necessary pressing force and to move the axle and the at least one press abutment (17) in the longitudinal direction of the axle relative to each other to perform the pressing or removal procedure,
with a device to accommodate an axle in the wheelset press during the pressing process with two opposite centring tips (11, 12), wherein each centring tip can be introduced into a centring bore provided in the facing axle end and means are provided via which the mutual spacing of the centring tips can be changed and wherein the centring tips (11, 12) are provided on the face (9, 10) of plungers (7, 8) on the piston cylinder units (3, 4) which are suitable for transmitting the pressure to the facing end of the axle,
with at least one press abutment (17) to support a wheel, a brake disc or similar during the pressing process, which is designed such that by a relative movement of the axle transverse to its longitudinal direction it can be brought to its support position and otherwise lies outside the pressing area, **characterised in that**
the at least one press abutment (17) can be established in various positions along the axle.

2. Wheelset press according to claim 1, **characterised in that** the centring tips (11, 12) can be moved in the axial direction while retaining their mutual spacing.

3. Wheelset press according to claim 1 or 2, **characterised in that** the press abutment (17) is provided on a carriage arrangement (50) which can be moved in the axial direction and established in various positions.

4. Wheelset press according to claim 3, **characterised in that** the carriage arrangement (50) is arranged between an upper and a lower cross beam (13, 14) and **in that** the carriage arrangement (50) and cross beams (13, 14) have locking means which allow a form-fit engagement of the carriage arrangement (50) and the cross beams (13, 14) in the various positions.

5. Wheelset press according to claim 4, **characterised in that** the locking means comprise recesses (22, 23) provided in the cross beams (13, 14) and spaced in the axial direction, and on both sides of the carriage arrangement (50) each facing one of the cross beams, optionally a locking element (18, 19) which can be introduced into at least one of the recesses.

6. Wheelset press according any one of claims 3 to 5, **characterised in that** the carriage arrangement (50) can be moved in the axial direction by means of a linear adjustment device, for example a spindle or gear drive.

7. Wheelset press according any one of claims 3 to 6, **characterised in that** the tool (17) is arranged to be displaceable transverse to the axial direction on the carriage arrangement (50).

8. Wheelset press according to claim 7, **characterised in that** a hydraulically activated piston/cylinder unit (26) serves to move the tool (17) transverse to the axial direction.

9. Wheelset press according any one of claims 4 to 8, **characterised in that** at least the lower cross beam (14) has an approximately flat surface and is designed to be suitable for recessed installation in the ground.

10. Wheelset press according any one of claims 1 to 9, **characterised in that** a rail arrangement (15, 16) is provided leading over the lower cross beam (14) and through the wheelset press for at least one industrial truck (F) for the advance and/or withdrawal of wheelsets (R) to be pressed on or removed.
